(19) Europäisches Patentamt / European Patent Office / Office européen des brevets

(11) **EP 3 264 314 B1**

(12) **EUROPEAN PATENT SPECIFICATION**

(45) Date of publication and mention
of the grant of the patent:
**17.02.2021  Bulletin 2021/07**

(51) Int Cl.:
**G06F 16/00** *(2019.01)*     **G06F 16/245** *(2019.01)*
**G06F 21/62** *(2013.01)*

(21) Application number: **16177310.6**

(22) Date of filing: **30.06.2016**

(54) **SYSTEM AND METHOD FOR SEARCHING OVER ENCRYPTED DATA**

SYSTEM UND VERFAHREN ZUR SUCHE ÜBER VERSCHLÜSSELTE DATEN

SYSTÈME ET PROCÉDÉ DE RECHERCHE SUR DES DONNÉES CHIFFRÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2018  Bulletin 2018/01**

(73) Proprietor: **Huawei Technologies Co., Ltd.
Longgang District
Shenzhen, Guangdong 518129 (CN)**

(72) Inventors:
• **GROHMANN, Bjoern
80992 Munich (DE)**
• **SCHAAD, Andreas
80992 Munich (DE)**
• **LI, Yong
80992 Munich (DE)**

(74) Representative: **Maiwald Patent- und
Rechtsanwaltsgesellschaft mbH
Elisenhof
Elisenstraße 3
80335 München (DE)**

(56) References cited:
**EP-A1- 2 731 046     US-A1- 2012 078 914**

**Description**

BACKGROUND

The present invention, in some embodiments thereof, relates to cryptography and, more specifically, but not exclusively, to systems and methods for searching over encrypted data.

Encrypted data may be stored, for example, by a user in a computing cloud. The user may perform queries, such a searching, over the encrypted data to identify one or more encrypted items.

Methods have been developed to allow the user to perform a search over the encrypted data, for example, methods based on tokenization. In such methods, the plaintext is simply replaced with ciphertext in a deterministic manner, meaning that multiple encryptions of the same plaintext always result in the same ciphertext. The search token is encrypted using the same encryption mechanism used to encrypt the data being searched. The encrypted search token may be used to search over the encrypted data by finding a match between the encrypted search token and the encrypted data. In such methods however, a potential attacker may analyze the created ciphertext to learn the underlying encryption mechanism.

US20120078914A1 describes a searchable symmetric encryption (SSE) mechanism, which modifies at least one instance of pointer information that has been encrypted without decrypting the pointer information.

SUMMARY

It is an object of the present invention to provide an apparatus, a system, a computer program product, and a method for searching over encrypted data.

The foregoing and other objects are achieved by the features of the independent claims. Further implementation forms are apparent from the dependent claims, the description and the figures.

According to a first aspect, an apparatus for modifying a database storing encrypted data for searching the database over the encrypted data is configured to: access the database comprising a plurality of data instances encrypted using a non-deterministic encryption method, wherein each data instance includes at least one data entry; the database including a first unique identifier entry stored in association with each respective data instance of the plurality of data instances; perform for each data instance of the plurality of data instances to create a respective second unique identifier entry, the respective second unique identifier entry being created by: applying a mapping function to the data instance to generate a mapped value, applying a first secure compression function to a hash-key and the mapped value to generate a first hashed-value, applying a second secure compression function to the first hashed-value and the first unique identifier entry associated with the data instance to generate the second unique identifier entry, and storing within the database the second unique identifier entry associated with the respective data instance of the plurality of data instances; and output the database for searching over encrypted data instances stored in the database.

The second unique identifier entry is calculated and stored within the database, which allows searching over the encrypted database without significantly increasing the search and/or access time, without significantly increasing storage requirements (e.g., redundant storage of data), and/or without necessarily requiring additional logic to map external results back to the database, and/or by reducing the processor resources required for searching and/or updating (e.g., to maintain consistency between the second unique identifier and updates to the database), for example, in comparison to storing the second unique identifier externally to the database.

In a first possible implementation of the apparatus according to the first aspect, the second unique identifier entries are stored as an index data structure within the database defined by a database management system (DBMS) used to access the database to improve performance of a query search over the database.

Storing the index in the same database improves performance of the apparatus, for example, by reducing the amount of storage hardware, storage space, and/or processor resources required to access the index, and/or reducing access time, for example, in comparison to storing the index externally from the database.

In a second possible implementation form of the apparatus according to the first aspect as such or according to any of the preceding implementation forms of the first aspect, the apparatus is further configured to: receive a data element for searching over the encrypted data instances stored in the database, wherein the data element is a member of a set of values represented by the mapping function applied to the plurality of data instances; create a search token by applying the first secure compression function to a hash-key and the data element; create a set of search queries by applying the second secure compression function to the search token and each first unique identifier entry of each data instance of the plurality of data instances; and identify at least one data instance that includes the data element by identifying a match between at least one member of the set of search queries and at least one second unique identifier entry associated with the identified at least one data instance.

In a third possible implementation form of the apparatus according to the second form, the apparatus is further configured to: apply the mapping function to the data element to output a mapped-data element; and create the search token by applying the first secure compression function to a hash-key and the mapped-data element.

In a fourth possible implementation form of the apparatus according to the second form, the identifying at least one data instance is performed using query functions defined by a DBMS used to access the database.

Existing database functions may be used, reducing or preventing the need to use additional logic, which improves efficiency of the apparatus.

In a fifth possible implementation form of the apparatus according to the fourth form, the creating the set of search queries is automatically performed by a user defined function (UDF) that computes the second secure compression function using functions defined by the DBMS.

The apparatus may be used with existing DBMS that provide UDFs, improving performance of the apparatus by re-using existing components, which reduces computer resources for performing the search (e.g., additional logic is not necessarily needed).

In a sixth possible implementation form of the apparatus according to the fourth or fifth forms, the apparatus is further configured to decrypt the identified at least one data instance, and present an indication of the decrypted at least one data item on a screen.

In a seventh possible implementation form of the apparatus according to the first aspect as such or according to any of the preceding implementation forms of the first aspect, the mapping function is a non-deterministic cryptographic index function wherein encryption of the same text produces a different ciphertext.

In an eighth possible implementation form of the apparatus according to the first aspect as such or according to any of the preceding implementation forms of the first aspect, the second unique identifier entry comprises a plurality of dimensions allowing for a search query to be defined over the plurality of dimensions.

In a ninth possible implementation form of the apparatus according to the first aspect as such or according to any of the preceding implementation forms of the first aspect, creating comprises creating a set of second unique identifier entries for each data instance of the plurality of data instances by performing for each data instance of the plurality of data instances: applying a mapping function of a plurality of mapping functions to the data instance to output a mapped value; applying the first secure compression function to a hash-key and the mapped value to output a first hashed-value; applying the second secure compression function to the first hashed-value, to a value of a plurality of values of a third identifier, and the first unique identifier entry associated with the data instance to output a member of the set of second unique identifier entries; wherein the steps for creating the set of second unique identifier entries are iterated using another mapping function of the plurality of mapping functions; and wherein storing comprises storing within the database the set of second unique identifier entries associated with each data instance of the plurality of data instances.

In a tenth possible implementation form of the apparatus according to the ninth form, the apparatus is further configured to: receive a data element for searching over the encrypted data instances stored in the database, wherein the data element is a member of a set of values represented by the plurality of mapping function applied to the plurality of data instances; create a search token by applying the first secure compression function to a hash-key and the data element; create a set of search queries by applying the second secure compression function to the search token, to a value of the plurality of values of the third identifier, and each first unique identifier entry of each data instance of the plurality of data instances; and identify at least one data instance that includes the data element by identifying a match between at least one member of the set of search queries and at least one second unique identifier entry associated with the identified at least one data instance.

In an eleventh possible implementation form of the apparatus according to the tenth form, the creating the set of search queries is by applying the second secure compression function to the search token is iterated using another value of the plurality of values of the third identifier.

In a twelfth possible implementation form of the apparatus according to the first aspect as such or according to any of the preceding implementation forms of the first aspect, the first secure compression function comprises a first keyed cryptographic hash function, and the second secure compression function comprises a second keyed cryptographic hash function.

According to a second aspect, a method modifies a database storing encrypted data for searching the database over the encrypted data. The method is adapted to operate an apparatus according to the first aspect as such or according to any of the preceding forms of the first aspect.

According to a third aspect, a computer program stored on a computer readable medium runs the method according to the second aspect when executed by a processor of a computer.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:

FIG. 1A is a flowchart of a method for modifying a database storing encrypted data instances for searching over the encrypted data instances, by storing calculated unique identifier entries within the database, in accordance with some embodiments of the present invention;

FIG. 1B is a flowchart of an exemplary method for creating the unique identifier entry that is stored in the database, in accordance with some embodiments of the present invention;

FIG. 1C is a flowchart of an exemplary method for searching the encrypted data instances using the unique identifier, in accordance with some embodiments of the present invention;

FIG. 2 is a block diagram of components of a system that searches over the encrypted data instances using the created second unique identifier entries, in accordance with some embodiments of the present invention;

FIG. 3 is a graph conceptually depicting the technical improvement achievable by the systems and/or methods described herein, in accordance with some embodiments of the present invention;

FIG. 4 is another flowchart of an exemplary method of searching over encrypted data using the created second unique identifier entries, in accordance with some embodiments of the present invention;

FIG. 5 is a block diagram of an exemplary architecture for searching over encrypted data instances stored in a database, using a unique second identifier stored within the database, in accordance with some embodiments of the present invention;

FIG. 6 is an exemplary dataflow diagram for creating unique second identifier(s) that are stored within the encrypted database, in accordance with some embodiments of the present invention; and

FIG. 7 is an exemplary dataflow diagram for searching over encrypted data instances stored in a database using unique second identifier(s) that are stored within the encrypted database, in accordance with some embodiments of the present invention.

DETAILED DESCRIPTION

The present invention, in some embodiments thereof, relates to cryptography and, more specifically, but not exclusively, to systems and methods for searching over encrypted data.

An aspect of some embodiments of the present invention relations to systems and/or methods (e.g., code instructions executed by one or more processors) that calculate and store unique identifier entries (also referred to herein as an index) within a database storing encrypted data, for example, as a column, field, or other entry within the database. The unique identifier entries are used to search over the encrypted data. Storing the unique identifier entries within the database allows searching over the encrypted database without significantly increasing the search and/or access time, without significantly increasing storage requirements (e.g., redundant storage of data), and/or without necessarily requiring additional logic to map external results back to the database, and/or by reducing the processing resources required for searching and/or updating (e.g., to maintain consistency between the unique identifier and updates to the database), for example, in comparison to storing the unique identifier externally to the database.

The unique identifier is created for each encrypted data instance (which stores at least one data entry) stored in the database, by applying a mapping function to the data instance to generate a mapped value. A first secure compression function (e.g., cryptographic hash function) is applied to a hash-key and to the mapped value to generate a first hashed-value. A second secure compression function is applied to the first hashed-value and to another (e.g. a first type of) unique identifier entry (which is stored in association with each respective data instance), to create the unique identifier entry (e.g., a second type of unique identifier entry) which is stored within the database in association with the respective data instance. The database, which is modified to include the created unique identifier entries, is provided for searching over the encrypted data instances.

Optionally, the created unique identifier entries (i.e., of the second type) are stored as an index data structure within the database. Optionally, the database is defined by a database management system (DBMS) used to access the database to improve performance of a query search over the encrypted data instances stored in the database. Storing the index in the database improves performance of the computing unit and/or storage unit hosting the database, for example, by reducing the amount of storage hardware, storage space, and/or processor resources required to access the index, and/or reducing access time, for example, in comparison to storing the index externally from the database.

The created unique identified entries, which are stored within the database, are used to search over the encrypted data instances stored in the database. A search token is created by applying the first secure compression function to a hash-key and a data element used for searching over the encrypted data instances, for example, a search query such as key word(s). The data element is a member of a set of values created when the mapping function is applied to the data instances. A set of search queries is created by applying the second secure compression function to the search token and each first type of unique identifier entry of each data instance. One or more data instances that include the data element are identified based on a match between one or more members of the set of search queries and one or more second type of unique identifier entry stored in the database. The identification of the matching data instance(s) may be performed using one or more query functions defined by the DBMS used to access the database. Existing database functions may be used, reducing or preventing the need to use additional logic, which improves efficiency of the apparatus. The search of queries may be automatically created using a user defined function (UDF) that computes the second secure compression function using functions defined by the DBMS. Using existing DBMS that provide UDFs improves performance of the processor(s) performing the search, by re-using existing components, which reduces computer resources for performing the search (e.g., additional logic is not necessarily needed).

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

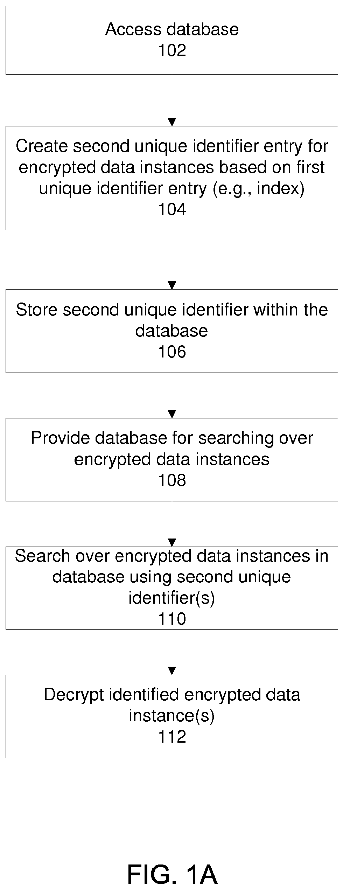

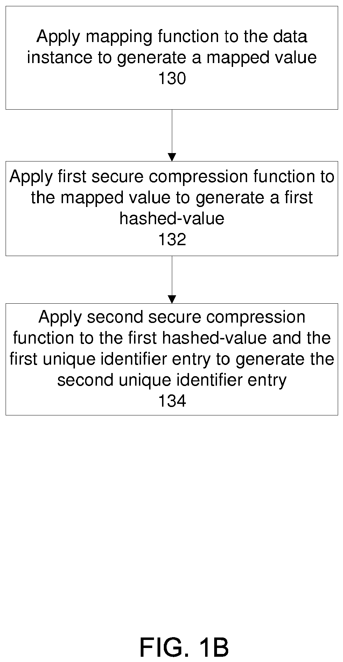

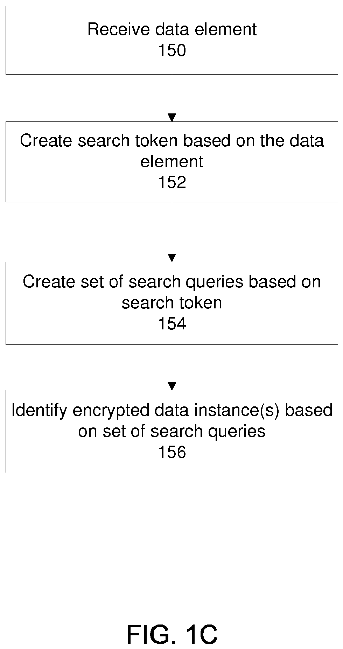

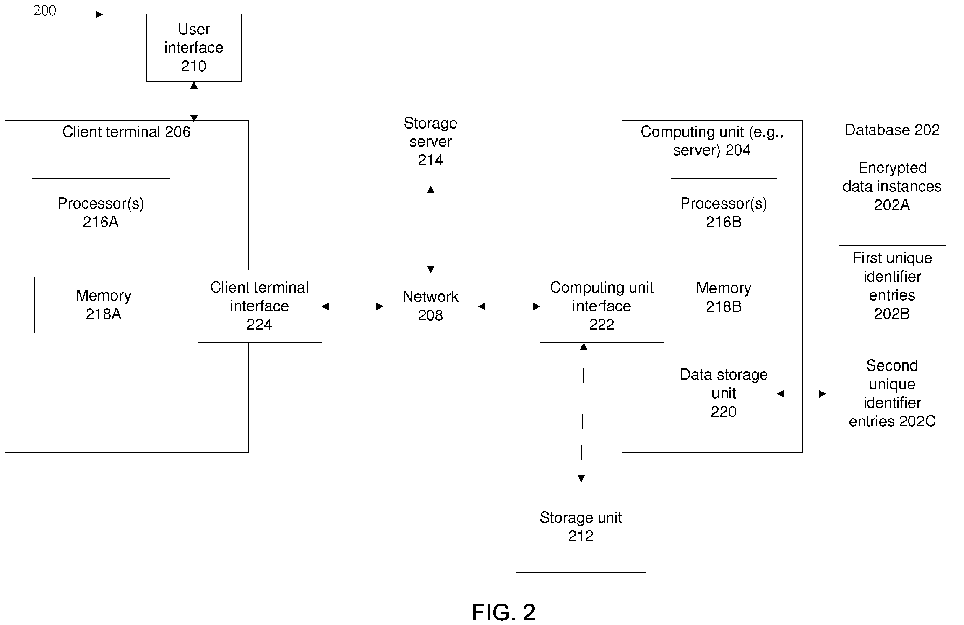

Reference is now made to FIG. 1A, which is a flowchart of a method for modifying a database storing encrypted data instances for searching over the encrypted data instances, by storing calculated unique identifier entries (referred to herein as a second unique identifier entry) within the database, in accordance with some embodiments of the present invention. Reference is also made to FIG. 1B, which is a flowchart of an exemplary method for creating the second unique identifier entry that is stored in the database, in accordance with some embodiments of the present invention. Reference is also made to FIG. 1C, which is a flowchart of an exemplary method for searching the encrypted data instances using the second unique identifier, in accordance with some embodiments of the present invention. Reference is also made to FIG. 2, which is a block diagram of components of a system 200 that searches over the encrypted data instances using the created second unique identifier entries, in accordance with some embodiments of the present invention.

It is noted that system 200 represents multiple architectures which may be used to implement the method of FIG. 1A for searching database 202. As described herein, database 202 stores encrypted data instances 202A, a set of first unique identifiers 202B, and a set of second unique identifiers 202C. In one implementation, database 202 is stored on a computing unit (e.g., server) 204 in communication with one or more client terminals 206 over a network 208. A user may use a user interface 210 to enter a search query for searching over database 202. The results may be displayed to the user on user interface 210 (or another user interface). In another implementation, database 202 is stored externally to computing unit 204, on a locally connected storage unit 212. In yet another implementation, database 202 is stored on a remote server 214 accessed by computing unit 204. In yet another implementation, computing unit 204 performs one or more functions of client terminal 206, and is in communication with user interface 210. In such an implementation, the user may use user interface 210 to enter the search query directly into computing unit 204 (e.g., client terminal 206 and computing unit 204 are implemented as a single unit). It is noted that database 202 may be a distributed database hosted by multiple computing units 204.

Exemplary client terminal(s) 206 include: mobile device, stationary device, server, smartphone, laptop, tablet computer, wearable computing device, glasses computing device, watch computing device, desktop computer, and a kiosk.

Computing unit 204 may be implemented, for example as, a network server, a web server, a computing cloud, a local server, a remote server, or a client terminal running code. Computing unit 204 may be implemented as a hardware component (e.g., standalone computing unit), as a software component (e.g., implemented within an existing computing unit), and/or as a hardware component inserted into an existing computing unit (e.g., plug-in card, attachable unit). The server implementation may provide services to client terminals by providing software as a service (SAAS), providing an application that may be installed on the client that communicates with the server, and/or providing functions using remote access sessions.

Each client terminal 206 and computing unit 204 includes a respective processor(s) 216A-B and respective memory 218A-B for storing instruction code executable by the respective processor(s) 216A-B.

Processor(s) 216A-B may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processor(s) 216A-B may include one or more processors (homogenous or heterogeneous), which may be arranged for parallel processing, as clusters and/or as one or more multi core processing units.

Memory 218A-B store code instructions executed by respective processor(s) 216A-B, for example, a random access memory (RAM), read-only memory (ROM), and/or a storage device, for example, non-volatile memory, magnetic media, semiconductor memory devices, hard drive, removable storage, and optical media (e.g., DVD, CD-ROM).

Computing unit 204 may include a storage unit 220 that act as a data repository for storing data, for example, a memory, a hard-drive, an optical disc, a temporary storage unit, an internal storage unit, and an external (optionally removable) storage unit. Database 202 may be hosted by storage unit 220.

Computing unit 204 may include a computing unit interface 222 for communication with one or more of: client terminal 206 (via network 208 and client interface 224), remote server 214 hosting database 202 (directly via interface 222 or indirectly via network 208), and storage unit 212 hosting database 202 (directly via interface 222 or indirectly via network 208 or another communication channel). Server interface 222 may be implemented, for example, as an interface to a remote storage server, an interface to a cloud server, a network interface, and/or an interface to other storage units.

Exemplary user interface 210 (which may be integrated with a display, or be implemented as a separate device) include one or more of: a touchscreen, a keyboard, a mouse, and voice activated software operating using speakers and microphone.

Network 208 may include, for example one or more of, the internet, a local area network (LAN), a wide area network, a private network, a virtual private network (VPN), a wireless network, and a cellular network.

One or more acts of the method of FIGs. 1A-1C may be performed, for example, by processor(s) 216B of computing unit 204 executing code instructions stored in memory 218B, and/or by processor(s) 216A of client terminal 206 executing code instructions stored in memory 218A.

At 102, client terminal 206 accesses database 202 storing data instances 202A encrypted optionally using a non-deterministic encryption method. It is noted that database 202 may be initially stored locally by client terminal 206, and/or may be remotely accessed by client terminal 206. Database 202 may be transmitted by client terminal 206 to computing unit 204 for secure storage and for searching over encrypted data instances 202A when database 202 includes second unique identifier 202C, as described herein.

The data instances may be encrypted using at least indistinguishability under chose plaintext attack (IND-CPA) secure encryption. Each data instance includes one or more data entries. The data instances may include documents, or for example, emails, word processing documents, presentations, spreadsheets, application determined database entries, records, medical records, and portable document format (PDF) files. Data instances may include files, for example, images, music files, other audio files, videos, application defined files, and other data. Data entries may be, for example, words, paragraphs, metadata, pages, and related files.

The data instances may be encrypted, for example, by a user using user interface 210 of client terminal 206, by remote server 214, or by other computing devices external to computing unit 204. The encrypted data instances 202A may be transmitted in the encrypted state to computing unit 204 (e.g., server) for secure storage and for searching over encrypted data instances 202A. It is noted that computing unit 204 may be unaware of the plaintext of encrypted data instances 202A, and/or may be unable to decrypt encrypted data instances 202A. In another example, the data instances are encrypted by computing unit 204.

Database 202 includes a first unique identifier entry 202B stored in association with each respective encrypted data instance 202A, for example, the first unique identifier entry may be a number, which may be assigned sequentially such as a counter, or other code (e.g., numeric, alphabetical, alphanumeric). First unique identifier entries 202B may be stored, for example, as an entry added to each row storing respective encrypted data instances 202A, for example, a column added to a table, or other data structure implementations.

First unique identifier entry 202B may be created by computing unit 204 for each encrypted data instance 202A, and/or may be pre-existing, for example, a feature of the database management system used to host and/or query database 202.

At 104, client terminal 206 creates a respective second unique identifier entry 202C for each (or some) encrypted data instance 202A.

Second unique identifier entries 202C may be stored, for example, as an entry added to each row storing respective encrypted data instances 202A, for example, a column added to a table, or other data structure implementations.

The second unique identifier entry 202C may include one or multiple dimensions allowing for a search query to be defined over the one or multiple dimensions.

For example, database 202 may be implemented as a table having three columns, a first column including first unique identifier 202B, a second column including encrypted data instances 202A, and a third column including second unique identifier 202C.

Reference is now made to FIG. 1B, which is a flowchart of an exemplary method for creating the second unique identifier entry for respective encrypted data instances, in accordance with some embodiments of the present invention. The second unique identifier entries 202C may be created by client terminal 206 and stored within database 202. Database 202 including stored second unique identifier entries 202C is transmitted to computing unit 204 for secure storage and for searching over encrypted data instances 202A.

The acts of the method are described with reference to each data instance. It is understood that the acts of the method are performed for each data instance, sequentially, in parallel, and/or substantially simultaneously.

At 130, a mapping function is applied to the respective data instance to generate a mapped value. The mapping function is optionally a non-deterministic cryptographic index function, where encryption of the same text produces a different ciphertext.

At 132, a first secure compression function is applied to a hash-key and the mapped value to generate a first hashed-value. Optionally, the first secure compression function is a first keyed cryptographic hash function.

At 134, a second secure compression function is applied to the first hashed-value and the first unique identifier entry associated with the data instance, to generate the second unique identifier entry. Optionally, the second secure compression function is a second keyed cryptographic hash function, for example, SHA-3.

The acts 130-134 of the method of FIG. 1B may be mathematically represented as:

$$H\,(i,\,h(k_h,\,\iota(d_i))),$$

where

$d_i$ denotes the respective data instance,

$\iota$ denotes the mapping function, for example, representing an index function $\iota : D \rightarrow \chi$, where D denotes a domain of the respective data instance, $\chi$ denotes a set,

$k_h$ denotes the hash-key,

$h$ denotes the first secure compression function, for example, representing (optionally keyed) cryptograhic hash function $h : \kappa \times \chi \rightarrow Y,$ where $\kappa$ and $\chi$ denote sets,

$i$ denotes the first unique identifier entry associated with the data instance,

$H$ denotes the second secure compression function, $H : C \times Y \rightarrow Z,$ where $C, Y$, and $Z$ are sets.

It is noted that the method described with reference to FIG. 1B may be used to create a multidimensional index that may be used to search for encrypted data entries. The method of FIG. 1B may be used to create a set of second unique identifier entries for each data instance. The set of second unique identifier entries represent the multidimensional index that may be used to search for encrypted data entries.

At 130, a mapping function of multiple designated mapping functions is applied to the data instance to output a mapped value.

At 132, the first secure compression function is applied to a hash-key and the mapped value to output a first hashed-value.

At 134, the second secure compression function is applied to the first hashed-value, to a value of a third unique identifier entry, and to the first unique identifier entry associated with the data instance to output a member of the set of second unique identifier entries.

Blocks 130-134 are iterated using another mapping function of the multiple designated mapping functions, to create the members of the set of second unique identifier entries. The set of second unique identifier entries may be used as the second unique identifier entry described herein.

When used to create the multi-dimensional set of second unique identifier entries, the acts 130-134 of the method of FIG. 1B may be mathematically represented as:

$$H\ (i,\ 0,\ h(k_h,\ \iota_0(d_i)))\ \|\ \dots\ \|\ H\ (i,\ l\text{-}1,\ h(k_h,\ \iota_{l\text{-}1}(d_i)))$$ (which is used to calculate the set of second unique identifier entries calcualted for each data instance), where

$\iota$ denotes the third unique identifier entry,

the range of the mapping function is modified from $\chi$ to $\chi^1$,

the domain of the second secure compression function is changed to $C$ x $C$ x $Y$,

$i = 0, \dots, n\text{-}1$, where $\iota_j$ denotes a projection of $\iota$ to the $j$'s component of $\chi^1$, with j $\in \{0, \dots, l\text{-}1\}$,

$\|$ denotes concatenation of strings.

At 106, second unique identifier entry 202C associated with the respective data instance is stored within the database 202.

Optionally, the second unique identifier entries are stored as an index data structure within the database defined by a database management system (DBMS) used to access the database to improve performance of a query search over the database.

At 108, database 202 is outputted for searching over encrypted data instances 202A stored in the database 202. The search is performed using second unique identifier entries 202C stored in database 202.

Database 202 may be transmitted by client terminal 206 (or other computing device that created second unique identifier entries 202C and/or encrypted data instances 202A) to computing unit 204, or other storage device for secure storage.

At 110, a search is performed over encrypted data instances 202A stored in database 202. Reference is now made to FIG. 1C, which is a flowchart of an exemplary method for searching over encrypted data instances 202A using second unique identifier entries 202C stores in database 202.

At 150, a data element for searching over the encrypted data instances 202A stored in database 202 is received. The data element may be received, for example, by a user using user interface 210 to enter the data element into client terminal 206, for example, the user manually entering one or more keywords into a graphical user interface (GUI) search application.

The data element is a member of a set of values represented by the mapping function applied to the data instances, for example, at least one keyword which exists in the data instances (e.g., word(s) in the stored documents) and/or at least one keyword associated with the data instances (e.g., stored in metadata of a file).

At 152, a search token is created by applying the first secure compression function to a hash-key and the data element.

Alternatively or additionally, the mapping function is applied to the data element to output a mapped-data element. The search token is created by applying the first secure compression function to a hash-key and the mapped-data element.

The search token may be mathematically represented as:

$$t \leftarrow h(k_h, \sigma)$$

where

t denotes the search token,

*h* denotes the first secure compression function,

$k_h$ denotes the hash-key, and

σ denotes the data element, or the mapped-data element, $\sigma \in \iota(D),$ where $\iota$ denotes the mapping function and D denotes a domain of the respective data instance.

At 154, a set of search queries is created by applying the second secure compression function to the search token and each first unique identifier entry of each data instance. Each search query may identify a match of the data element within the respective data instance.

Optionally, the set of search queries is automatically performed by a user defined function (UDF) that computes the second secure compression function using functions defined by the DBMS.

For example, when the DBMS is Structured Query Language (SQL), an exemplary UDF to create the set of search queries may include:

*SELECT encData FROM db. table WHERE dataIndex=H(rowId,t),*

where

encData denotes a certain encrypted data instance stored in encrypted data instances 202A,
db.table denotes database 202,
dataIndex denotes a certain second unique identifier entry stored in second unique identifier entries 202C,
H denotes the second secure compression function,
rowId denotes a certain first unique identifier entry stored in first unique identifier entries 202B, and
t denotes the search token.

At 156, one or more data instances (stored in encrypted data instances 202A) that include and/or match the data element is identified by executing the set of search queries. The entire set of search queries may be executed, or a sub-set of search queries, for example, until a match is found. The search queries may be executed sequentially, in parallel, or using other processing methods.

The data instance is identified by identifying a match between one or more members of the set of search queries and one or more second unique identifier entries associated with the identified data instance(s). The identification of the matching data instance may be performed using the query functions defined by the DBMS used to access the database, optionally by executing the created UDF to automatically run the queries on database 202 using the DBMS components.

It is noted that acts 150-152 may be executed by client terminal 206, for example, using a secret encryption key known to client terminal 206 and not known to computing unit 204. The created search token may be transmitted by client terminal 206 to computing unit 204 for performing the search over encrypted data instances 202A using the search token and the second unique identifier entries 202C stored in database 202. Acts 154-156 may be executed by computing unit 204 using the UDF of the DBMS, without computing unit 204 having the ability to decrypt encrypted data instances 202A.

The acts of the method of FIG. 1C may be used to perform a multi-dimensional search using the set of unique second identifier entries calculated for each data instance.

At 150, a data element is received for searching over encrypted data instances 202A stored in database 202. The data element is a member of a set of values represented by the multiple mapping functions applied to the data instance(s).

When the search is performed using the multi-dimensional set of unique second identifier elements, the data

$$\sigma \in \bigcup_{j=0}^{l-1} \iota_j(\mathcal{D})$$

element may be mathematically represented as:

At 152, a search token is created by applying the first secure compression function to a hash-key and the data element.

At 154, a set of search queries is created by applying the second secure compression function to the search token, to a value of the third identifier, and each first unique identifier entry of each data instance. The set of search queries is created by iteratively applying the second secure compression function to the search token using another value of the third identifier.

When the DBMS is Structured Query Language (SQL), an exemplary UDF to create the set of search queries for searching using the multi-dimensional set of unique second identifier elements may include:

```
SELECT encData FROM db.table WHERE (dataIndex LIKE "%"‖
H(rowId,0,t) ‖"%") OR ....
```

```
... OR (dataIndex LIKE "%"‖ H(rowId,l-1,t) ‖"%").
```

At 156, one or more data instances that includes the data element are identified by identifying a match between one or more members of the set of search queries and one or more second unique identifier entries associated with the identified data instance(s).

At 112, the identified encrypted data instance(s) is decrypted, and optionally presented on a display (e.g., on user interface 210). Optionally, an indication of the decrypted data instance is presented, for example, the filename or document name that includes the keywords.

Optionally, the identified encrypted data instance (or indication thereof) is transmitted by computing unit 204 to client terminal 206. Client terminal 206 may decrypt the identified encrypted data instance (or indication thereof), for example, using a secret decryption key known to client terminal 206 (or to the user using client terminal 206).

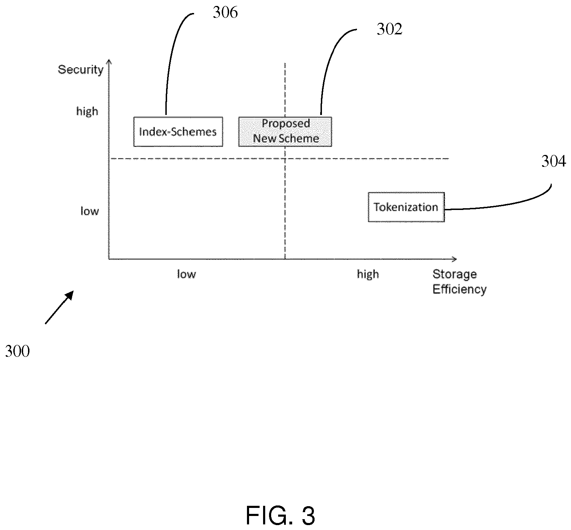

Reference is now made to FIG. 3, which is a graph 300 conceptually depicting the technical improvement achievable by the systems and/or methods described herein, in accordance with some embodiments of the present invention. The systems and/or methods described herein (represented as box 302) provide a technical improvement in both security and storage efficiency as compared to token based methods 304, in which plaintext stored in a database is encrypted using a deterministic encryption scheme, and a search token created using the same deterministic encryption scheme is used to search over the encrypted data. The systems and/or methods described herein 302 achieve at least an improvement in storage efficiency as compared to index based methods 306 in which an index is stored externally to the database storing the encrypted data.

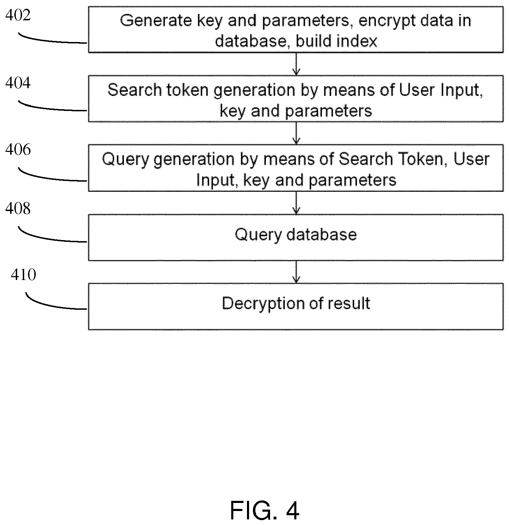

Reference is now made to FIG. 4, which is another flowchart of an exemplary method of searching over encrypted data using the created second unique identifier entries, in accordance with some embodiments of the present invention. The method described with reference to FIG. 4 may be implemented by system 200 described with reference to FIG. 2.

At 402, key and parameters may be generated, for example, by client terminal 206, or other computing device (e.g., server) performing encryption functions. The data instances are encrypted and stored in encrypted data instances 202A, for example, by client terminal 206. The index (i.e., second unique identifier entries 202C) is created as described herein, and stored in database 202.

Database 202 may be transmitted by client terminal 206 for storage by computing unit 204 (e.g., a secure storage server, such as a computing cloud).

At 404, a search token is generated based on user input such as search keywords (e.g., received using user interface 210), the generated keys, and the generated parameters, as described herein. The search token may be created by client terminal 206.

At 406, the query is generated from the search token, as described herein. The query may be created by client terminal 206, or by computing unit 204 (e.g., based on the search token provided by client terminal 206).

At 408, database 202 is queried using the created query. The querying of the database may be performed by computing unit 204.

At 410, the resulting encrypted data instances stored in 202A identified using the queries are decrypted and optionally presented to the user on a display. The encrypted results (or indications thereof) may be transmitted by computing unit 204 to client terminal 206. The decryption may be performed by client terminal 206.

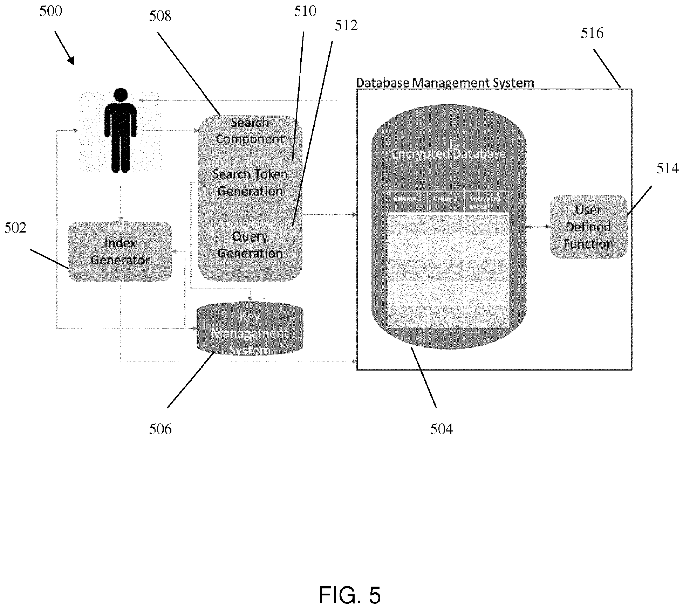

Reference is now made to FIG. 5, which is a block diagram of an exemplary architecture 500 for searching over encrypted data instances stored in a database, using a unique second identifier stored within the database, in accordance with some embodiments of the present invention. Architecture 500 may represent an exemplary implementation based on FIGs. 1A-1C, and/or based on system 200 of FIG. 2.

A user (e.g., using a client terminal) uses an index generator 502 (e.g., code instructions executed by a processor(s) of a client terminal or another computing device being accessed by the user) to create an index (also referred to herein as second unique identifier entries) which is stored inside encrypted database 504, for example, as an additional column, as described herein. The index is created using a key provided by a key management system (KMS) 506, for example, code instructions stored on the client terminal, or a server accessed by the client terminal (e.g., over a network). Encrypted database 504 may be stored locally on the client terminal, or transmitted to another storage location, for example, a storage server, a computing cloud, or an external storage device.

The user performs a search over encrypted database 504 by accessing a search component 508 (e.g., a GUI, a locally stored application, code instructions executed by the processor(s) of the client terminal). Search component 508 may parse the user input (e.g., keywords entered using the GUI) to generate a search token using a key provided by KMS 506. The search token may be created using search token generation code 510. Query generation code 512 creates a query based on the search token used to search encrypted database 504.

When encrypted database 504 is stored on a computing device external to the client terminal, the query may be transmitted to the storing computing device. A user defined function 514 defined by the database management system 516 defining database 504 is used to apply the search query to search encrypted database 504, as described herein. The encrypted result is transmitted by the computing device (e.g., storage server) to the client terminal. The result is decrypted using a decryption key provided by KMS 506.

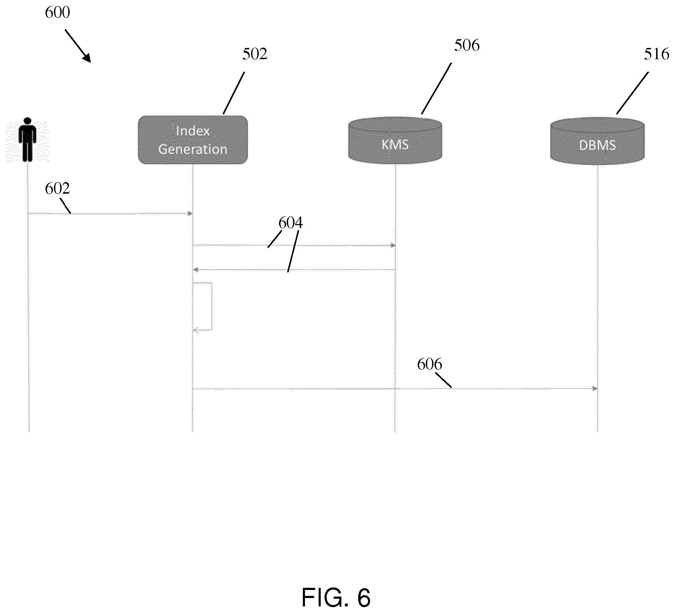

Reference is now made to FIG. 6, which is an exemplary dataflow diagram 600 for creating unique second identifier(s) that are stored within the encrypted database, in accordance with some embodiments of the present invention. Dataflow diagram 600 may represent an exemplary implementation based on FIGs. 1A-1C, and/or based on system 200 of FIG. 2, and/or based on architecture 500 of FIG. 5. Components are numbered and are as described with reference to FIG. 5.

At 602, index generation 502 is accessed to create the second unique identifier (i.e., index) for the encrypted database.

At 604, one or more keys are retrieved from KMS 506. The keys are used to create the second unique identifier, as described herein.

At 606, the created second unique identifiers are stored within the encrypted database managed by DBMS 516, as described herein.

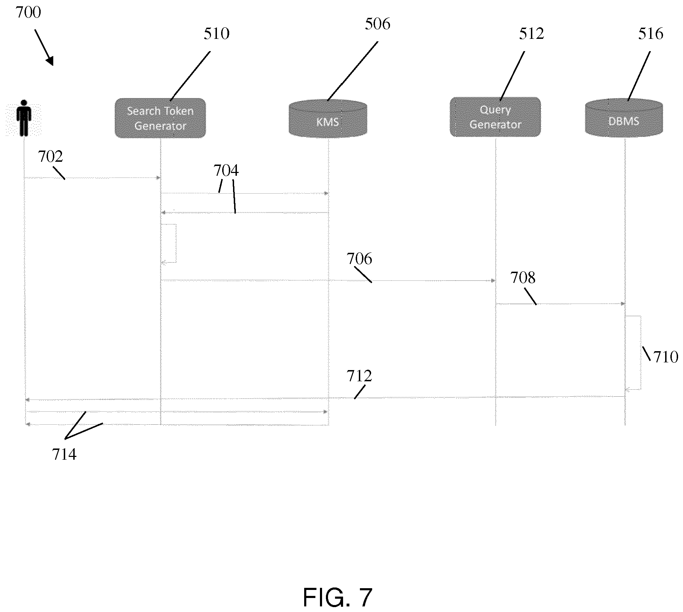

Reference is now made to FIG. 7, which is an exemplary dataflow diagram 700 for searching over encrypted data instances stored in a database using unique second identifier(s) that are stored within the encrypted database, in accordance with some embodiments of the present invention. Dataflow diagram 700 may represent an exemplary implementation based on FIGs. 1A-1C, and/or based on system 200 of FIG. 2, and/or based on architecture 500 of FIG. 5. Components are numbered and are as described with reference to FIG. 5. Dataflow 700 may be used to search using the second unique identifiers created using dataflow 600 described with reference to FIG.6.

At 702, a search query is sent to search token generator 510, for example, one or more keywords entered by a user using a GUI or other interface.

At 704, KMS 506 provides one or more keys for generation of the search token, as described herein.

At 706, the created search token is sent to query generator 512, which creates the search query based on the search token, as described herein.

At 708, the search query is provided to DBMS 516.

At 710, the search query is used by DBMS 516 to search over the encrypted database, optionally using the UDF, as described herein.

At 712, the identified encrypted results are transmitted to the client terminal of the user.

At 714, the encrypted results are decrypted using a decryption key provided by KMS 506.

The descriptions of the various embodiments of the present invention have been presented for purposes of illustration, but are not intended to be exhaustive or limited to the embodiments disclosed. The invention is defined by the appended claims.

As used herein the term "about" refers to ± 10 %.

The terms "comprises", "comprising", "includes", "including", "having" and their conjugates mean "including but not limited to". This term encompasses the terms "consisting of' and "consisting essentially of'.

The phrase "consisting essentially of' means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

**Claims**

1.  An apparatus for modifying a database storing encrypted data for searching the database over the encrypted data, wherein the apparatus is configured to:

    access the database comprising a plurality of data instances encrypted using a non-deterministic encryption method, wherein each data instance includes at least one data entry; the database including a first unique identifier entry stored in association with each respective data instance of the plurality of data instances;
    create, for each data instance of the plurality of data instances, a respective second unique identifier entry, the respective second unique identifier entry being created by:

    applying a mapping function to the data instance to generate a mapped value;
    applying a first secure compression function to a hash-key and the mapped value to generate a first hashed-value;
    applying a second secure compression function to the first hashed-value and the first unique identifier entry associated with the data instance to generate the second unique identifier entry; and
    storing within the database the second unique identifier entry associated with the respective data instance of the plurality of data instances as an entry added to a row storing the respective encrypted data instance, wherein the second unique identifier entry comprises a plurality of dimensions allowing for a search query to be defined over the plurality of dimensions; and

    output the database for searching over encrypted data instances stored in the database.

2.  The apparatus according to claim 1, wherein the second unique identifier entries are stored as an index data structure within the database defined by a database management system (DBMS) used to access the database to improve performance of a query search over the database.

3.  The apparatus according to any of claims 1-2, wherein the apparatus is further configured to:

    receive a data element for searching over the encrypted data instances stored in the database, wherein the data element is a member of a set of values represented by the mapping function applied to the plurality of data instances;
    create a search token by applying the first secure compression function to a hash-key and the data element;
    create a set of search queries by applying the second secure compression function to the search token and each first unique identifier entry of each data instance of the plurality of data instances; and
    identify at least one data instance that includes the data element by identifying a match between at least one member of the set of search queries and at least one second unique identifier entry associated with the identified at least one data instance.

4.  The apparatus according to claim 3, wherein the apparatus is further configured to:

    apply the mapping function to the data element to output a mapped-data element; and
    create the search token by applying the first secure compression function to a hash-key and the mapped-data element.

5.  The apparatus according to claim 3, wherein the identifying at least one data instance is performed using query functions defined by a DBMS used to access the database.

6.  The apparatus according to claim 5, wherein the creating the set of search queries is automatically performed by a user defined function (UDF) that computes the second secure compression function using functions defined by the DBMS.

7. The apparatus according to any of claims 5-6, further comprising decrypting the identified at least one data instance, and presenting an indication of the decrypted at least one data item on a screen.

8. The apparatus according to any of claims 1-7, wherein the mapping function is a non-deterministic cryptographic index function wherein encryption of the same text produces a different ciphertext.

9. The apparatus according to any of claims 1-8, wherein creating comprises creating a set of second unique identifier entries for each data instance of the plurality of data instances by performing for each data instance of the plurality of data instances:

applying a mapping function of a plurality of mapping functions to the data instance to output a mapped value;
applying the first secure compression function to a hash-key and the mapped value to output a first hashed-value;
applying the second secure compression function to the first hashed-value, to a value of a plurality of values of a third identifier, and the first unique identifier entry associated with the data instance to output a member of the set of second unique identifier entries;
wherein the steps for creating the set of second unique identifier entries are iterated using another mapping function of the plurality of mapping functions; and
wherein storing comprises storing within the database the set of second unique identifier entries associated with each data instance of the plurality of data instances.

10. The apparatus according to claim 9, wherein the apparatus is further configured to:

receive a data element for searching over the encrypted data instances stored in the database, wherein the data element is a member of a set of values represented by the plurality of mapping function applied to the plurality of data instances;
create a search token by applying the first secure compression function to a hash-key and the data element;
create a set of search queries by applying the second secure compression function to the search token, to a value of the plurality of values of the third identifier, and each first unique identifier entry of each data instance of the plurality of data instances; and
identify at least one data instance that includes the data element by identifying a match between at least one member of the set of search queries and at least one second unique identifier entry associated with the identified at least one data instance.

11. The apparatus according to claim 10, wherein the creating the set of search queries is by applying the second secure compression function to the search token is iterated using another value of the plurality of values of the third identifier.

12. The apparatus according to any of claims 1-11, wherein the first secure compression function comprises a first keyed cryptographic hash function, and the second secure compression function comprises a second keyed cryptographic hash function.

13. A method that modifies a database storing encrypted data for searching the database over the encrypted data, wherein the method is adapted to operate an apparatus according to one of the previous claims.

14. A computer program stored on a computer readable medium that runs the preceding method when executed by a processor of a computer.

**Patentansprüche**

1. Vorrichtung zum Ändern einer Datenbank, die verschlüsselte Daten speichert, zum Durchsuchen der Datenbank über die verschlüsselten Daten, wobei die Vorrichtung dazu ausgelegt ist:

auf die Datenbank zuzugreifen, die eine Vielzahl von Dateninstanzen umfasst, die unter Verwendung eines nicht-deterministischen Verschlüsselungsverfahrens verschlüsselt sind, wobei jede Dateninstanz mindestens einen Dateneintrag enthält;
wobei die Datenbank einen ersten eindeutigen Identifikatoreintrag enthält, der in Verbindung mit jeder betreffenden Dateninstanz der Vielzahl von Dateninstanzen gespeichert ist;
für jede Dateninstanz der Vielzahl von Dateninstanzen einen jeweiligen zweiten eindeutigen Identifikatoreintrag zu erstellen, wobei der jeweilige zweite eindeutige Identifikatoreintrag erstellt wird durch:

Anwenden einer Abbildungsfunktion auf die Dateninstanz, um einen abgebildeten Wert zu erzeugen;
Anwenden einer ersten sicheren Komprimierungsfunktion auf einen Hashschlüssel und den abgebildeten Wert, um einen ersten Hashwert zu erzeugen;
Anwenden einer zweiten sicheren Komprimierungsfunktion auf den ersten Hashwert und den ersten eindeutigen Identifikatoreintrag, der mit der Dateninstanz verknüpft ist, um den zweiten eindeutigen Identifikatoreintrag zu erzeugen; und
Speichern des zweiten eindeutigen Identifikatoreintrags, der mit der jeweiligen Dateninstanz der Vielzahl von Dateninstanzen verknüpft ist, in der Datenbank als einen Eintrag, der zu einer Zeile hinzugefügt wird, die die jeweilige verschlüsselte Dateninstanz speichert, wobei der zweite eindeutige Identifikatoreintrag eine Vielzahl von Dimensionen umfasst, die es ermöglichen, eine Suchabfrage über die Vielzahl von Dimensionen zu definieren; und

die Datenbank für die Suche über verschlüsselte Dateninstanzen, die in der Datenbank gespeichert sind, auszugeben.

2. Vorrichtung gemäß Anspruch 1, wobei die zweiten eindeutigen Identifikatoreinträge als eine Indexdatenstruktur innerhalb der Datenbank gespeichert sind, die durch ein Datenbankverwaltungssystem (DBMS) definiert ist, das zum Zugreifen auf die Datenbank verwendet wird, um die Leistung einer Abfragesuche über die Datenbank zu verbessern.

3. Vorrichtung gemäß einem der Ansprüche 1-2, wobei die Vorrichtung ferner dazu ausgelegt ist:

ein Datenelement zum Suchen über die in der Datenbank gespeicherten verschlüsselten Dateninstanzen zu empfangen, wobei das Datenelement ein Element einer Menge von Werten ist, die durch die auf die Vielzahl von Dateninstanzen angewandte Abbildungsfunktion dargestellt wird;
ein Suchtoken durch Anwenden der ersten sicheren Komprimierungsfunktion auf einen Hashschlüssel und das Datenelement zu erstellen;
eine Menge von Suchabfragen durch Anwenden der zweiten sicheren Komprimierungsfunktion auf das Suchtoken und jeden ersten eindeutigen Identifikatoreintrag jeder Dateninstanz der Vielzahl von Dateninstanzen zu erstellen; und
mindestens eine Dateninstanz zu identifizieren, die das Datenelement enthält, durch Identifizieren einer Übereinstimmung zwischen mindestens einem Element der Menge der Suchabfragen und mindestens einem zweiten eindeutigen Identifikatoreintrag, der mit der identifizierten mindestens einen Dateninstanz verknüpft ist.

4. Vorrichtung gemäß Anspruch 3, wobei die Vorrichtung ferner dazu ausgelegt ist:

die Abbildungsfunktion auf das Datenelement anzuwenden, um ein abgebildetes Datenelement auszugeben; und
das Suchtoken durch Anwenden der ersten sicheren Komprimierungsfunktion auf einen Hashschlüssel und das abgebildete Datenelement zu erstellen.

5. Vorrichtung gemäß Anspruch 3, wobei das Identifizieren mindestens einer Dateninstanz unter Verwendung von Abfragefunktionen durchgeführt wird, die durch ein zum Zugreifen auf die Datenbank verwendetes DBMS definiert sind.

6. Vorrichtung gemäß Anspruch 5, wobei das Erstellen der Menge von Suchabfragen automatisch durch eine benutzerdefinierte Funktion (UDF) durchgeführt wird, die die zweite sichere Komprimierungsfunktion unter Verwendung von durch das DBMS definierten Funktionen berechnet.

7. Vorrichtung gemäß einem der Ansprüche 5-6, ferner umfassend das Entschlüsseln der identifizierten mindestens einen Dateninstanz und das Anzeigen des entschlüsselten mindestens einen Datenelements auf einem Bildschirm.

8. Vorrichtung gemäß einem der Ansprüche 1-7, wobei die Abbildungsfunktion eine nicht-deterministische kryptografische Indexfunktion ist, wobei die Verschlüsselung desselben Textes einen unterschiedlichen Verschlüsselungstext erzeugt.

**9.** Vorrichtung gemäß einem der Ansprüche 1-8, wobei das Erstellen das Erstellen einer Menge von zweiten eindeutigen Identifikatoreinträgen für jede Dateninstanz der Vielzahl von Dateninstanzen durch Durchführen für jede Dateninstanz der Vielzahl von Dateninstanzen umfasst von:

Anwenden einer Abbildungsfunktion einer Vielzahl von Abbildungsfunktionen auf die Dateninstanz, um einen abgebildeten Wert auszugeben;
Anwenden der ersten sicheren Komprimierungsfunktion auf einen Hashschlüssel und den abgebildeten Wert, um einen ersten Hashwert auszugeben;
Anwenden der zweiten sicheren Komprimierungsfunktion auf den ersten Hashwert, auf einen Wert aus einer Vielzahl von Werten eines dritten Identifikators und auf den ersten eindeutigen Identifikatoreintrag, der mit der Dateninstanz verknüpft ist, um ein Element der Menge der zweiten eindeutigen Identifikatoreinträge auszugeben;
wobei die Schritte zum Erzeugen der Menge von zweiten eindeutigen Identifikatoreinträgen unter Verwendung einer anderen Abbildungsfunktion der Vielzahl von Abbildungsfunktionen iteriert werden; und
wobei das Speichern das Speichern der Menge von zweiten eindeutigen Identifikatoreinträgen, die mit jeder Dateninstanz der Vielzahl von Dateninstanzen verknüpft sind, in der Datenbank umfasst.

**10.** Vorrichtung gemäß Anspruch 9, wobei die Vorrichtung ferner dazu ausgelegt ist:

ein Datenelement zum Suchen über die verschlüsselten Dateninstanzen zu empfangen, die in der Datenbank gespeichert sind, wobei das Datenelement ein Element einer Menge von Werten ist, die durch die Vielzahl von Abbildungsfunktionen dargestellt werden, die auf die Vielzahl von Dateninstanzen angewendet werden;
ein Suchtoken durch Anwenden der ersten sicheren Komprimierungsfunktion auf einen Hashschlüssel und das Datenelement zu erstellen;
eine Menge von Suchabfragen durch Anwenden der zweiten sicheren Komprimierungsfunktion auf das Suchtoken, auf einen Wert der Vielzahl von Werten des dritten Identifikators und auf jeden ersten eindeutigen Identifikatoreintrag jeder Dateninstanz der Vielzahl von Dateninstanzen zu erstellen; und
mindestens eine Dateninstanz zu identifizieren, die das Datenelement enthält, durch Identifizieren einer Übereinstimmung zwischen mindestens einem Element der Menge der Suchabfragen und mindestens einem zweiten eindeutigen Identifikatoreintrag, der mit der identifizierten mindestens einen Dateninstanz verknüpft ist.

**11.** Vorrichtung gemäß Anspruch 10, wobei das Erstellen der Menge von Suchabfragen durch Anwenden der zweiten sicheren Komprimierungsfunktion auf das Suchtoken unter Verwendung eines anderen Wertes aus der Vielzahl von Werten des dritten Identifikators iteriert wird.

**12.** Vorrichtung gemäß einem der Ansprüche 1-11, wobei die erste sichere Komprimierungsfunktion eine erste verschlüsselte kryptografische Hashfunktion umfasst und die zweite sichere Komprimierungsfunktion eine zweite verschlüsselte kryptografische Hashfunktion umfasst.

**13.** Verfahren, das eine Datenbank ändert, die verschlüsselte Daten speichert, um die Datenbank über die verschlüsselten Daten zu durchsuchen, wobei das Verfahren dazu angepasst ist, eine Vorrichtung gemäß einem der vorhergehenden Ansprüche zu betreiben.

**14.** Auf einem computerlesbaren Medium gespeichertes Computerprogramm, das beim Ausführen durch einen Prozessor eines Computers das vorhergehende Verfahren durchführt.


**Revendications**

**1.** Appareil permettant de modifier une base de données stockant des données chiffrées pour rechercher dans la base de données des données chiffrées, dans lequel l'appareil est configuré pour :

accéder à la base de données comprenant une pluralité d'instances de données chiffrées à l'aide d'un procédé de chiffrement non déterministe, dans lequel chaque instance de données inclut au moins une entrée de données ; la base de données incluant une première entrée d'identifiant unique stockée en association avec chaque instance de données respective de la pluralité d'instances de données ;
créer, pour chaque instance de données de la pluralité d'instances de données, une seconde entrée d'identifiant unique respective, la seconde entrée d'identifiant unique respective étant créée par :

l'application d'une fonction de mise en correspondance à l'instance de données pour générer une valeur mise en correspondance ;

l'application d'une première fonction de compression sécurisée à une clé de hachage et à la valeur mise en correspondance pour générer une première valeur hachée ;

l'application d'une seconde fonction de compression sécurisée à la première valeur hachée et à la première entrée d'identifiant unique associée à l'instance de données pour générer la seconde entrée d'identifiant unique ; et

le stockage dans la base de données de la seconde entrée d'identifiant unique associée à l'instance de données respective de la pluralité d'instances de données en tant qu'entrée ajoutée à une rangée stockant l'instance de données chiffrées respective, dans lequel la seconde entrée d'identifiant unique comprend une pluralité de dimensions permettant à une requête de recherche d'être définie sur la pluralité de dimensions ; et

la délivrance de la base de données pour rechercher des instances de données chiffrées stockées dans la base de données.

2. Appareil selon la revendication 1, dans lequel les secondes entrées d'identifiants uniques sont stockées en tant que structure de données d'indices dans la base de données définie par un système de gestion de bases de données (DBMS) utilisé pour accéder à la base de données afin d'améliorer les performances d'une recherche de requête sur la base de données.

3. Appareil selon l'une quelconque des revendications 1 à 2, dans lequel l'appareil est configuré en outre pour :

recevoir un élément de données pour rechercher des instances de données chiffrées stockées dans la base de données, dans lequel l'élément de données est un élément d'un ensemble de valeurs représentées par la fonction de mise en correspondance appliquée à la pluralité d'instances de données ;

créer un jeton de recherche en appliquant la première fonction de compression sécurisée à une clé de hachage et à l'élément de données ;

créer un ensemble de requêtes de recherche en appliquant la seconde fonction de compression sécurisée au jeton de recherche et à chaque première entrée d'identifiant unique de chaque instance de données de la pluralité d'instances de données ; et

identifier au moins une instance de données qui inclut l'élément de données en identifiant une correspondance entre au moins un élément de l'ensemble de requêtes de recherche et au moins une seconde entrée d'identifiant unique associée à au moins une instance de données identifiée.

4. Appareil selon la revendication 3, dans lequel l'appareil est configuré en outre pour :

appliquer la fonction de mise en correspondance à l'élément de données pour délivrer un élément de données mis en correspondance ; et

créer le jeton de recherche en appliquant la première fonction de compression sécurisée à une clé de hachage et à l'élément de données mis en correspondance.

5. Appareil selon la revendication 3, dans lequel l'identification d'au moins une instance de données est exécutée à l'aide de fonctions de requête définies par un DBMS utilisé pour accéder à la base de données.

6. Appareil selon la revendication 5, dans lequel la création de l'ensemble de requêtes de recherche est exécutée automatiquement par une fonction définie par un utilisateur (UDF) qui calcule la seconde fonction de compression sécurisée à l'aide des fonctions définies par le DBMS.

7. Appareil selon l'une quelconque des revendications 5 à 6, comprenant en outre le déchiffrage de l'au moins une instance de données identifiée, et la présentation d'une indication de l'au moins un élément de données déchiffré sur un écran.

8. Appareil selon l'une quelconque des revendications 1 à 7, dans lequel la fonction de mise en correspondance est une fonction d'indice cryptographique non déterministe dans lequel le chiffrement du même texte produit un texte chiffré différent.

9. Appareil selon l'une quelconque des revendications 1 à 8, dans lequel la création comprend la création d'un ensemble de secondes entrées d'identifiants uniques pour chaque instance de données de la pluralité d'instances de données en effectuant pour chaque instance de données de la pluralité d'instances de données :

l'application d'une fonction de mise en correspondance d'une pluralité de fonctions de mise en correspondance à l'instance de données pour délivrer une valeur mise en correspondance ;

l'application de la première fonction de compression sécurisée à une clé de hachage et à la valeur mise en correspondance pour délivrer une première valeur hachée ;

l'application de la seconde fonction de compression sécurisée à la première valeur hachée, à une valeur d'une pluralité de valeurs d'un troisième identifiant, et à la première entrée d'identifiant unique associée à l'instance de données pour délivrer un élément de l'ensemble de secondes entrées d'identifiants uniques ;

dans lequel les étapes consistant à créer l'ensemble de secondes entrées d'identifiants uniques sont itérées à l'aide d'une autre fonction de mise en correspondance de la pluralité de fonctions de mise en correspondance ; et

dans lequel le stockage consiste à stocker dans la base de données l'ensemble de secondes entrées d'identifiants uniques associées à chaque instance de données de la pluralité d'instances de données.

10. Appareil selon la revendication 9, dans lequel l'appareil est configuré en outre pour :

recevoir un élément de données pour rechercher des instances de données chiffrées stockées dans la base de données, dans lequel l'élément de données est un élément d'un ensemble de valeurs représentées par la pluralité de fonctions de mise en correspondance appliquées à la pluralité d'instances de données ;

créer un jeton de recherche en appliquant la première fonction de compression sécurisée à une clé de hachage et à l'élément de données ;

créer un ensemble de requêtes de recherche en appliquant la seconde fonction de compression sécurisée au jeton de recherche, à une valeur de la pluralité de valeurs du troisième identifiant, et à chaque première entrée d'identifiant unique de chaque instance de données de la pluralité d'instances de données ; et

identifier au moins une instance de données qui inclut l'élément de données en identifiant une correspondance entre au moins un élément de l'ensemble de requêtes de recherche et au moins une seconde entrée d'identifiant unique associée à l'au moins une instance de données identifiée.

11. Appareil selon la revendication 10, dans lequel la création de l'ensemble de requêtes de recherche se produit par l'application de la seconde fonction de compression sécurisée au jeton de recherche qui est itéré à l'aide d'une autre valeur de la pluralité de valeurs du troisième identifiant.

12. Appareil selon l'une quelconque des revendications 1 à 11, dans lequel la première fonction de compression sécurisée comprend une première fonction de hachage cryptographique codée, et la seconde fonction de compression sécurisée comprend une seconde fonction de hachage cryptographique codée.

13. Procédé qui modifie une base de données stockant des données chiffrées pour rechercher dans la base de données des données chiffrées, dans lequel le procédé est adapté pour utiliser un appareil selon l'une des revendications précédentes.

14. Programme informatique stocké sur un support lisible par ordinateur qui utilise le procédé précédent lorsqu'il est exécuté par un processeur d'un ordinateur.

Access database
102

Create second unique identifier entry for
encrypted data instances based on first
unique identifier entry (e.g., index)
104

Store second unique identifier within the
database
106

Provide database for searching over
encrypted data instances
108

Search over encrypted data instances in
database using second unique
identifier(s)
110

Decrypt identified encrypted data
instance(s)
112

FIG. 1A

Apply mapping function to the data
instance to generate a mapped value
130

Apply first secure compression function to
the mapped value to generate a first
hashed-value
132

Apply second secure compression
function to the first hashed-value and the
first unique identifier entry to generate the
second unique identifier entry
134

# FIG. 1B

```
┌─────────────────────────────────┐
│      Receive data element       │
│              150                │
└─────────────────────────────────┘
                 │
                 ▼
┌─────────────────────────────────┐
│  Create search token based on   │
│        the data element         │
│              152                │
└─────────────────────────────────┘
                 │
                 ▼
┌─────────────────────────────────┐
│  Create set of search queries   │
│     based on search token       │
│              154                │
└─────────────────────────────────┘
                 │
                 ▼
┌─────────────────────────────────┐
│ Identify encrypted data         │
│ instance(s) based on set of     │
│ search queries                  │
│              156                │
└─────────────────────────────────┘
```

# FIG. 1C

FIG. 2

FIG. 3

402 — Generate key and parameters, encrypt data in database, build index

404 — Search token generation by means of User Input, key and parameters

406 — Query generation by means of Search Token, User Input, key and parameters

408 — Query database

410 — Decryption of result

FIG. 4

FIG. 5

600

502

506

516

Index
Generation

KMS

DBMS

602

604

606

FIG. 6

700

510    506    512    516

702

704

706    708

710

712

714

# FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120078914 A1